# EUROPEAN PATENT SPECIFICATION

(11) **EP 2 919 522 B1**
(45) Date of publication and mention of the grant of the patent: **05.09.2018**
(21) Application number: 12888366.7
(22) Date of filing: 15.11.2012
(51) Int. Cl.: H04W 48/00, H04W 84/04

(54) **METHOD, BASE STATION, USER EQUIPMENT AND COMMUNICATION APPARATUS FOR TRANSMITTING DATA**
Verfahren, basisstation, benutzergerät und kommunikationsvorrichtung zur datenübertragung
PROCÉDÉ, STATION DE BASE, ÉQUIPEMENT D'UTILISATEUR ET APPAREIL DE COMMUNICATION POUR UNE TRANSMISSION DE DONNÉES

(43) Date of publication of application: 16.09.2015
(73) Proprietor: Huawei Technologies Co., Ltd., Longgang District Shenzhen, Guangdong 518129 (CN)
(72) Inventor: WANG, Yan, Shenzhen Guangdong 518129 (CN); LIN, Bo, Shenzhen Guangdong 518129 (CN); ZHANG, Tao, Shenzhen Guangdong 518129 (CN)
(74) Representative: Thun, Clemens
(86) International application number: PCT/CN2012/084668
(87) International publication number: WO 2014/075262

(56) References cited:
- WO-A2-2010/098574
- CN-A- 102 480 757
- CN-A- 102 638 899
- CN-A- 102 740 397
- US-A1- 2006 209 882
- US-A1- 2011 170 517

## Description

### TECHNICAL FIELD

The present invention relates to the communications field, and more specifically, to a data transmission method, a base station, a user equipment, and a communications apparatus.

### BACKGROUND

Wireless fidelity (wireless-fidelity, "WiFi" for short) is an industry term that is released by an organization named "Wireless Ethernet Compatibility Alliance" (Wireless Ethernet Compatibility Alliance, "WECA" for short). It is a short-distance wireless transmission technology, and can support a radio signal for Internet access within a range of hundreds of feet.

WiFi is more widely applied in handheld devices, and a smartphone is one of the handheld devices. Different from a Bluetooth technology previously applied in a mobile phone, WiFi has a larger coverage range and a higher transmission rate. Therefore, a WiFi mobile phone becomes a fashion trend in the current mobile communications industry.

Currently, there are more mobile phones that can access a network by using WiFi, and there are also many mobile phones that can provide a WiFi hotspot cell service. In other words, user equipment (User Equipment, "UE" for short) 1 enables a WiFi network, and allows other users UE2, UE3, and UE4 to access by using WiFi. However, data that is transmitted by UE2, UE3, and UE4 by using the WiFi network of UE1 may be transmitted by a network side as data of UE1. When UE2, UE3, and UE4 leave a WiFi hotspot area of UE1, transmission of this part of data is interrupted, which affects user experience.

US 2011/0170517 discloses the concept of a Local IP Access (LIPA) which allows an IP-capable user equipment connected via a femto cell direct access to other IP-capable devices in a local IP network.

### SUMMARY

Embodiments of the present invention provide a data transmission method, a base station, a user equipment, and a communications apparatus, which can improve user experience.

According to a first aspect, a data transmission method is provided, including: receiving, by a base station, a first transmission request message that is sent by a UE and requests to send data to the base station by using a first bearer of a first hotspot cell, where the first transmission request message carries an identifier of the first bearer and an identifier of the first hotspot cell; sending, by the base station, a first transmission response message in response to the first transmission request message to the UE; and receiving, by the base station, the data that is sent, after the UE receives the first transmission response message, by the UE by using the first bearer of the first hotspot cell.

In a first possible implementation manner, before the sending, by the base station, a first transmission response message in response to the first transmission request message to the UE, the method further includes: sending, by the base station to the first hotspot cell, a radio resource control (Radio Resource Control, "RRC" for short) reconfiguration message for updating air interface configuration.

With reference to the first aspect or the first possible implementation manner of the first aspect, in a second possible implementation manner, before the receiving, by a base station, a first transmission request message that is sent by a user equipment (UE) and requests to send data to the base station by using a first bearer of a first hotspot cell, the method further includes: determining, by the base station, an identifier of a hotspot cell within a service range of the base station.

With reference to the second possible implementation manner of the first aspect, in a third possible implementation manner, the determining, by the base station, an identifier of a hotspot cell within a service range of the base station includes: configuring, by the base station, the identifier of the hotspot cell within the service range of the base station; or receiving, by the base station, the identifier that is of the hotspot cell within the service range of the base station and configured by an operation administration and maintenance (Operation Administration and Maintenance, "OAM" for short) center; or receiving, by the base station, the identifier that is of the hotspot cell within the service range of the base station and sent by the hotspot cell within the service range of the base station.

With reference to the second or the third possible implementation manner of the first aspect, in a fourth possible implementation manner, before the sending, by the base station, a first transmission response message in response to the first transmission request message to the UE, the method further includes: determining, by the base station, that the first hotspot cell is within the service range of the base station.

With reference to the second or the third possible implementation manner of the first aspect, in a fifth possible implementation manner, after the determining, by the base station, an identifier of a hotspot cell within a service range of the base station, the method further includes: sending, by the base station, the identifier of the hotspot cell within the service range of the base station to the UE, so that the UE selects the first hotspot cell from the hotspot cell within the service range of the base station.

With reference to the first aspect or any one of the first to the fifth possible implementation manners of the first aspect, in a sixth possible implementation manner, the method further includes: sending, by the base station to the UE, a second transmission request message that requests to send data to the UE by using a second bearer of a second hotspot cell, where the second transmission request message carries an identifier of the second bearer and an identifier of the second hotspot cell; receiving, by the base station, a second transmission response message that is sent by the UE in response to the second transmission request message; and sending, by the base station, the data to the UE by using the second bearer of the second hotspot cell.

With reference to the first aspect or any one of the first to the sixth possible implementation manners of the first aspect, in a seventh possible implementation manner, a node that enables the first hotspot cell or the second hotspot cell includes another UE, a wireless-fidelity access point (WiFi AP), a micro base station (Pico eNB), a home NodeB (HeNB), or a relay point (Relay).

According to a second aspect, a data transmission method is provided, including: sending, by a user equipment (UE) to a base station, a first transmission request message that requests to send data to the base station by using a first bearer of a first hotspot cell, where the first transmission request message carries an identifier of the first bearer and an identifier of the first hotspot cell; receiving, by the UE, a first transmission response message that is sent by the base station in response to the first transmission request message; and sending, by the UE, the data to the base station by using the first bearer of the first hotspot cell.

In a first possible implementation manner, the first transmission response message is sent by the base station after the base station determines that the first hotspot cell is within a service range of the base station.

In a second possible implementation manner, before the sending, by a user equipment (UE) to a base station, a transmission request message that requests to send data to the base station by using a first bearer of a first hotspot cell, the method further includes: receiving, by the UE, an identifier that is of a hotspot cell within a service range of the base station and sent by the base station, and selecting the first hotspot cell from the hotspot cell within the service range of the base station; or receiving, by the UE, an identifier that is of a serving base station and sent by each hotspot cell, and selecting a hotspot cell whose serving base station has an identifier the same as an identifier of the base station as the first hotspot cell.

With reference to the second aspect or the first or the second possible implementation manner of the second aspect, in a third possible implementation manner, the method further includes: receiving, by the UE, a second transmission request message that is sent by the base station and requests to send data to the UE by using a second bearer of a second hotspot cell, where the second transmission request message carries an identifier of the second bearer and an identifier of the second hotspot cell; sending, by the UE, a second transmission response message in response to the second transmission request message to the base station; and receiving, by the UE, the data that is sent, after the base station receives the second transmission response message, by the base station by using the second bearer of the second hotspot cell.

With reference to the second aspect or any one of the first to the third possible implementation manners of the second aspect, in a fourth possible implementation manner, a node that enables the first hotspot cell or the second hotspot cell includes another UE, a wireless-fidelity access point (WiFi AP), a micro base station (Pico eNB), a home NodeB (HeNB), or a relay point (Relay).

According to a third aspect, a data transmission method is provided, including: receiving, by a node that enables a hotspot cell, data that is sent by a user equipment (UE) after the UE sends a first transmission request message to a base station, where the first transmission request message requests to send the data to the base station by using a first bearer of the hotspot cell, and the first transmission request message carries an identifier of the first bearer and an identifier of the hotspot cell; and sending, by the node, the data of the UE to the base station by using the first bearer.

In a first possible implementation manner, before the receiving, by a node that enables a hotspot cell, data that is sent by a user equipment (UE), the method further includes: receiving, by the node, a radio resource control (RRC) reconfiguration message that is used for updating air interface configuration and sent by the base station; and updating, by the node, the air interface configuration according to the RRC reconfiguration message.

With reference to the third aspect or the first possible implementation manner of the third aspect, in a second possible implementation manner, before the receiving, by a node that enables a hotspot cell, data that is sent by a user equipment (UE), the method further includes: sending, by the node, the identifier of the hotspot cell to the base station; or receiving, by the node, the identifier that is of the hotspot cell and configured by the base station; or receiving, by the node, the identifier that is of the hotspot cell and configured by an operation administration and maintenance (OAM) center.

With reference to the third aspect or the first or the second possible implementation manner of the third aspect, in a third possible implementation manner, before the receiving, by a node that enables a hotspot cell, data that is sent by a user equipment (UE), the method further includes: sending, by the node, an identifier of the base station to the UE, so that the UE determines that the node is within a service range of the base station.

With reference to the third aspect or any one of the first to the third possible implementation manners of the third aspect, in a fourth possible implementation manner, the method further includes: receiving, by the node, data that is sent by the base station after the base station sends a second transmission request message to the UE, where the second transmission request message requests to send the data to the UE by using a second bearer of the hotspot cell, and the second transmission request message carries an identifier of the second bearer and the identifier of the hotspot cell; and sending, by the node, the data of the base station to the UE by using the second bearer.

With reference to the third aspect or any one of the first to the fourth possible implementation manners of the third aspect, in a fifth possible implementation manner, the node includes another UE, a wireless-fidelity access point (WiFi AP), a micro base station (Pico eNB), a home NodeB (HeNB), or a relay point (Relay).

According to a fourth aspect, a base station is provided, including: a receiving module, configured to receive a first transmission request message that is sent by a user equipment (UE) and requests to send data to the base station by using a first bearer of a first hotspot cell, where the first transmission request message carries an identifier of the first bearer and an identifier of the first hotspot cell; a sending module, configured to send a first transmission response message in response to the first transmission request message to the UE; wherein the receiving module is further configured to receive the data that is sent, after the UE receives the first transmission response message, by the UE by using the first bearer of the first hotspot cell.

In a first possible implementation manner, the sending module is further configured to: before sending the first transmission response message in response to the first transmission request message to the UE, send, to the first hotspot cell, a radio resource control (RRC) reconfiguration message for updating air interface configuration.

With reference to the fourth aspect or the first possible implementation manner of the fourth aspect, in a second possible implementation manner, the base station further includes: a determining module, configured to: before the receiving module receives the first transmission request message that is sent by the user equipment (UE) and requests to send the data to the base station by using the first bearer of the first hotspot cell, determine an identifier of a hotspot cell within a service range of the base station.

With reference to the second possible implementation manner of the fourth aspect, in a second possible implementation manner, the determining module is specifically configured to: configure the identifier of the hotspot cell within the service range of the base station; or determine the identifier that is of the hotspot cell within the service range of the base station, configured by an operation administration and maintenance (OAM) center, and received by the receiving module; or determine the identifier that is of the hotspot cell within the service range of the base station, sent by the hotspot cell within the service range of the base station, and received by the receiving module.

With reference to the second or the third possible implementation manner of the fourth aspect, in a fourth possible implementation manner, the determining module is further configured to: before the sending module sends the first transmission response message in response to the first transmission request message to the UE, determine that the first hotspot cell is within the service range of the base station.

With reference to the second or the third possible implementation manner of the fourth aspect, in a fifth possible implementation manner, the sending module is further configured to send the identifier of the hotspot cell within the service range of the base station to the UE, so that the UE selects the first hotspot cell from the hotspot cell within the service range of the base station.

With reference to the fourth aspect or any one of the first to the fifth possible implementation manners of the fourth aspect, in a sixth possible implementation manner, the sending module is further configured to send, to the UE, a second transmission request message that requests to send data to the UE by using a second bearer of a second hotspot cell, where the second transmission request message carries an identifier of the second bearer and an identifier of the second hotspot cell; the receiving module is further configured to receive a second transmission response message that is sent by the UE in response to the second transmission request message; and the sending module is further configured to send the data to the UE by using the second bearer of the second hotspot cell.

With reference to the fourth aspect or any one of the first to the sixth possible implementation manners of the fourth aspect, in a seventh possible implementation manner, a node that enables the first hotspot cell or the second hotspot cell includes another UE, a wireless-fidelity access point (WiFi AP), a micro base station (Pico eNB), a home NodeB (HeNB), or a relay point (Relay).

According to a fifth aspect, a user equipment (UE) is provided, including: a sending module, configured to send, to a base station, a first transmission request message that requests to send data to the base station by using a first bearer of a first hotspot cell, where the first transmission request message carries an identifier of the first bearer and an identifier of the first hotspot cell; and a receiving module, configured to receive a first transmission response message that is sent by the base station in response to the first transmission request message; where the sending module is further configured to send the data to the base station by using the first bearer of the first hotspot cell.

In a first possible implementation manner, the first transmission response message is sent by the base station after the base station determines that the first hotspot cell is within a service range of the base station.

In a second possible implementation manner, the receiving module is further configured to: before the sending module sends, to the base station, the transmission request message that requests to send the data to the base station by using the first bearer of the first hotspot cell, receive an identifier that is of a hotspot cell within a service range of the base station and sent by the base station, or receive an identifier that is of a serving base station and sent by each hotspot cell; and the user equipment further includes: a determining module, configured to select the first hotspot cell from the hotspot cell within the service range of the base station, or select a hotspot cell whose serving base station has an identifier the same as an identifier of the base station as the first hotspot cell.

With reference to the fifth aspect or the first or the second possible implementation manner of the fifth aspect, in a third possible implementation manner, the receiving module is further configured to receive a second transmission request message that is sent by the base station and requests to send data to the UE by using a second bearer of a second hotspot cell, where the second transmission request message carries an identifier of the second bearer and an identifier of the second hotspot cell; the sending module is further configured to send a second transmission response message in response to the second transmission request message to the base station; and the receiving module is further configured to receive the data that is sent, after the base station receives the second transmission response message, by the base station by using the second bearer of the second hotspot cell.

With reference to the fifth aspect or any one of the first to the third possible implementation manners of the fifth aspect, in a fourth possible implementation manner, a node that enables the first hotspot cell or the second hotspot cell includes another UE, a wireless-fidelity access point (WiFi AP), a micro base station (Pico eNB), a home NodeB (HeNB), or a relay point (Relay).

According to a sixth aspect, a communications apparatus is provided, including: a receiving module, configured to: when the communications apparatus enables a hotspot cell, receive data that is sent by a user equipment (UE) after the UE sends a first transmission request message to a base station, where the first transmission request message requests to send the data to the base station by using a first bearer of the hotspot cell, and the first transmission request message carries an identifier of the first bearer and an identifier of the hotspot cell; and a sending module, configured to send the data of the UE to the base station by using the first bearer.

In a first possible implementation manner, the receiving module is further configured to: before receiving the data sent by the user equipment (UE), receive a radio resource control (RRC) reconfiguration message that is used for updating air interface configuration and sent by the base station; and the communications apparatus further includes: a configuring module, configured to update the air interface configuration according to the RRC reconfiguration message.

With reference to the sixth aspect or the first possible implementation manner of the sixth aspect, in a second possible implementation manner, before the receiving module receives the data sent by the user equipment (UE), the sending module is further configured to send the identifier of the hotspot cell to the base station; or the receiving module is further configured to receive the identifier that is of the hotspot cell and configured by the base station; or the receiving module is further configured to receive the identifier of the hotspot cell and configured by an operation administration and maintenance (OAM) center.

With reference to the sixth aspect or the first or the second possible implementation manner of the sixth aspect, in a third possible implementation manner, the sending module is further configured to: before the receiving module receives the data sent by the user equipment (UE), send an identifier of the base station to the UE, so that the UE determines that the communications apparatus is within a service range of the base station.

With reference to the sixth aspect or any one of the first to the third possible implementation manners of the sixth aspect, in a fourth possible implementation manner, the receiving module is further configured to receive data that is sent by the base station after the base station sends a second transmission request message to the UE, where the second transmission request message requests to send the data to the UE by using a second bearer of the hotspot cell, and the second transmission request message carries an identifier of the second bearer and the identifier of the hotspot cell; and the sending module is further configured to send the data of the base station to the UE by using the second bearer.

With reference to the sixth aspect or any one of the first to the fourth possible implementation manners of the sixth aspect, in a fifth possible implementation manner, the communications apparatus is another UE, a wireless-fidelity access point (WiFi AP), a micro base station (Pico eNB), a home NodeB (HeNB), or a relay point (Relay).

According to a seventh aspect, a base station is provided, including: a transmitter, a receiver, a memory, and a processor that is connected to the transmitter, the receiver, and the memory, where the memory stores a group of program code, and the processor is configured to invoke the program code stored in the memory, so as to execute any method according to the foregoing first aspect.

According to an eighth aspect, a user equipment is provided, including: a transmitter, a receiver, a memory, and a processor that is connected to the transmitter, the receiver, and the memory, where the memory stores a group of program code, and the processor is configured to invoke the program code stored in the memory, so as to execute any method according to the foregoing second aspect.

According to a ninth aspect, a communications apparatus is provided, including: a transmitter, a receiver, a memory, and a processor that is connected to the transmitter, the receiver, and the memory, where the memory stores a group of program code, and the processor is configured to invoke the program code stored in the memory, so as to execute any method according to the foregoing third aspect.

According to a tenth aspect, a computer program product is provided, including a computer readable medium, where the readable medium includes a group of program code that is to execute any method in the foregoing.

Based on the foregoing technical solutions, in the embodiments of the present invention, a base station receives a transmission request message that is sent by a UE and that requests to send data to the base station by using a bearer of a hotspot cell, where the transmission request message carries an identifier of the bearer and an identifier of the hotspot cell, so that the base station can learn that the data transmitted from the hotspot cell belongs to the UE, which can ensure that a subsequent related service is not interrupted when the UE leaves the hotspot cell, thereby improving user experience.

### BRIEF DESCRIPTION OF DRAWINGS

To describe the technical solutions in the embodiments of the present invention more clearly, the following briefly introduces the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a schematic flowchart of a data transmission method according to an embodiment of the present invention;
FIG. 2A to FIG. 2D are schematic diagrams of four application scenarios according to an embodiment of the present invention;
FIG. 3 is another schematic flowchart of a data transmission method according to an embodiment of the present invention;
FIG. 4 is still another schematic flowchart of a data transmission method according to an embodiment of the present invention;
FIG. 5 is a schematic flowchart of a data transmission method according to another embodiment of the present invention;
FIG. 6 is another schematic flowchart of a data transmission method according to another embodiment of the present invention;
FIG. 7 is still another schematic flowchart of a data transmission method according to another embodiment of the present invention;
FIG. 8 is a schematic flowchart of a data transmission method according to still another embodiment of the present invention;
FIG. 9 is another schematic flowchart of a data transmission method according to still another embodiment of the present invention;
FIG. 10 is a schematic diagram of a data transmission method according to an embodiment of the present invention;
FIG. 11 is a schematic block diagram of a base station according to an embodiment of the present invention;
FIG. 12 is another schematic block diagram of a base station according to an embodiment of the present invention;
FIG. 13 is a schematic block diagram of a user equipment according to an embodiment of the present invention;
FIG. 14 is a schematic block diagram of a communications apparatus according to an embodiment of the present invention;
FIG. 15 is a schematic structural diagram of a base station according to an embodiment of the present invention;
FIG. 16 is a schematic structural diagram of a user equipment according to an embodiment of the present invention; and
FIG. 17 is a schematic structural diagram of a communications apparatus according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

It should be understood that, the technical solutions of the embodiments of the present invention may be applied to various communications systems, such as: a Global System for Mobile Communications (Global System of Mobile communication, "GSM" for short) system, a Code Division Multiple Access (Code Division Multiple Access, "CDMA" for short) system, a Wideband Code Division Multiple Access (Wideband Code Division Multiple Access, "WCDMA" for short) system, a general packet radio service (General Packet Radio Service, "GPRS" for short), a Long Term Evolution (Long Term Evolution, "LTE" for short) system, an LTE frequency division duplex (Frequency Division Duplex, "FDD" for short) system, an LTE time division duplex (Time Division Duplex, "TDD" for short), a Universal Mobile Telecommunications System (Universal Mobile Telecommunication System, "UMTS" for short), a Worldwide Interoperability for Microwave Access (Worldwide Interoperability for Microwave Access, "WiMAX" for short) communications system or the like.

It should also be understood that in the embodiments of the present invention, a user equipment (User Equipment, UE for short) may be referred to as a terminal (Terminal), a mobile station (Mobile Station, MS for short), a mobile terminal (Mobile Terminal), and the like. The user equipment may communicate with one or more core networks through a radio access network (Radio Access Network, RAN for short). For example, the user equipment may be a mobile phone (also referred to as a "cellular" phone) or a computer with a mobile terminal. For example, the user equipment may also be a portable, pocket-sized, handheld, computer built-in, or in-vehicle mobile apparatus, which exchanges voice and/or data with the radio access network.

In the embodiments of the present invention, the base station may be a base station (Base Transceiver Station, "BTS" for short) in GSM or CDMA, may also be a base station (NodeB, "NB" for short) in WCDMA, and may further be an evolved NodeB (Evolutional Node B, "eNB or e-NodeB" for short) in LTE, which is not limited in the present invention. However, for ease of description, the following embodiments are described by using a base station (eNB) and a user equipment (UE) as an example.

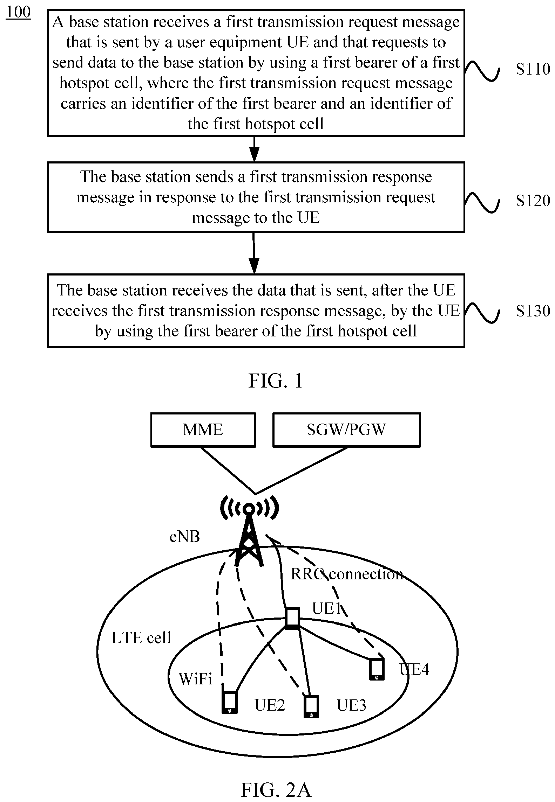

FIG. 1 shows a schematic flowchart of a data transmission method 100 according to an embodiment of the present invention. As shown in FIG. 1, the method 100 includes:
S110. A base station receives a first transmission request message that is sent by a user equipment (UE) and that requests to send data to the base station by using a first bearer of a first hotspot cell, where the first transmission request message carries an identifier of the first bearer and an identifier of the first hotspot cell.
S120. The base station sends a first transmission response message in response to the first transmission request message to the UE.
S130. The base station receives the data that is sent, after the UE receives the first transmission response message, by the UE by using the first bearer of the first hotspot cell.

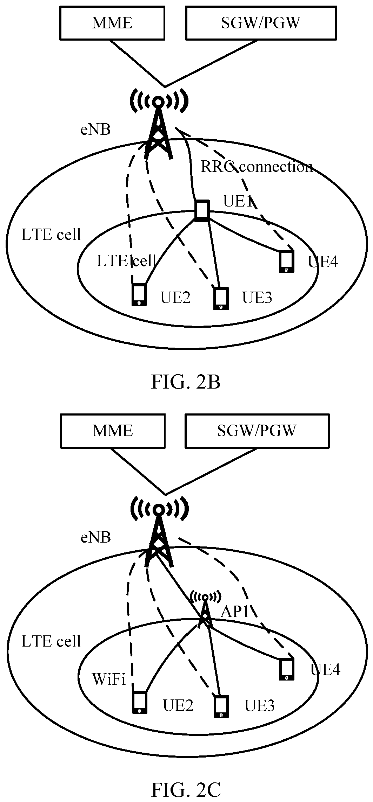

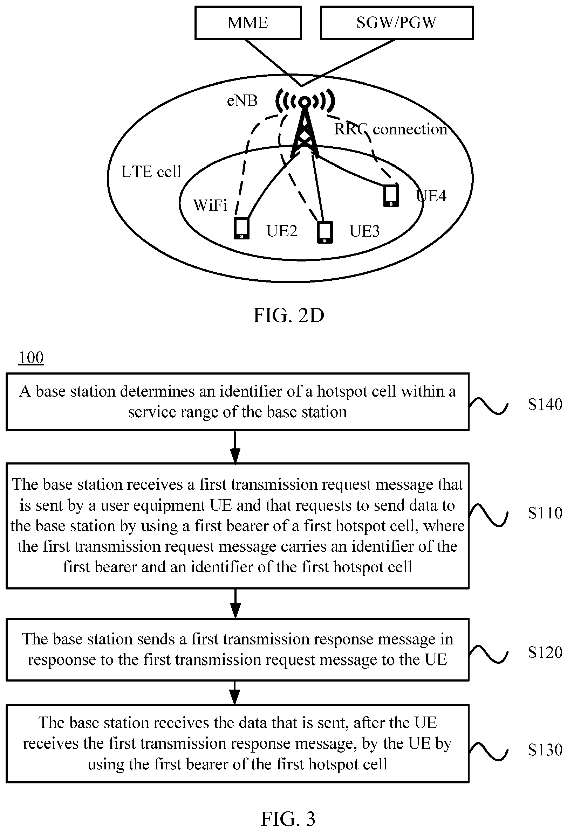

When the UE communicates with the base station through a hotspot cell, the base station does not learn that data transmitted through the hotspot cell is actually from the UE. Therefore, when the UE leaves the hotspot cell, transmission of the data is interrupted. For example, in FIG. 2A and FIG. 2B, UE2, UE3, and UE4 communicate with an eNB through a WiFi cell or an LTE cell that is enabled by another UE (UE1), the base station does not learn that a part of data transmitted by UE1 is actually from UE2, UE3, and UE4. In FIG. 2C and FIG. 2D, the base station does not learn that data transmitted by a WiFi access point (Access Point, "AP" for short) is actually from UE2, UE3, and UE4. In this embodiment of the present invention, in order that the base station can learn that a data packet transmitted from a hotspot cell belongs to the UE, the base station first receives the first transmission request message that is sent by the UE and that requests to send data to the base station by using the first bearer of the first hotspot cell, where the first transmission request message carries the identifier of the first bearer and the identifier of the first hotspot cell; the base station then sends the first transmission response message to the UE to acknowledge the request of the UE; and then, the base station receives the data that is sent by the UE by using the first bearer of the first hotspot cell. The base station learns, from the first transmission request message, that the data of the UE will be transmitted by using the first bearer of the first hotspot cell. Therefore, when receiving the data that is sent by the first hotspot cell by using the first bearer, the base station can learn that the data is from the UE.

Therefore, in the data transmission method in this embodiment of the present invention, a base station receives a transmission request message that is sent by a UE and that requests to send data to the base station by using a bearer of a hotspot cell, where the transmission request message carries an identifier of the bearer and an identifier of the hotspot cell, so that the base station can learn that the data transmitted from the hotspot cell belongs to the UE, which can ensure that a subsequent related service is not interrupted when the UE leaves the hotspot cell, thereby improving user experience.

It should be understood that, technical solutions in this embodiment of the present invention may be applied to various systems, such as a system shown in FIG. 2A, FIG. 2B, FIG. 2C, or FIG. 2D, that transmit data by using a hotspot cell.

In this embodiment of the present invention, a node that enables a hotspot cell includes another UE, a WiFi AP, a Pico eNB, an HeNB, or a Relay, which is not limited in this embodiment of the present invention.

In S110, the base station receives the first transmission request message that is sent by the user equipment (UE) and that requests to send data to the base station by using the first bearer of the first hotspot cell, where the first transmission request message carries the identifier of the first bearer and the identifier of the first hotspot cell.

Specifically, when detecting a hotspot cell (for example, a hotspot cell that is enabled by another UE), the UE sends a transmission request message to the base station, where the transmission request message carries an identifier of the hotspot cell and an identifier of a bearer, such as an evolved packet system (Evolved Packet System, "EPS" for short) bearer ID (EPS bearer ID), so as to indicate that the UE requests to send, through the hotspot cell indicated by the identifier of the hotspot cell, the bearer indicated by the identifier of the bearer to the base station. The base station receives the transmission request message, and learns the identifier ID of the hotspot cell and the identifier of the bearer.

Optionally, the UE may first send a bearer request to the first hotspot cell, and then send the first transmission request message to the base station.

In this embodiment of the present invention, as shown in FIG. 3, optionally, before S110, the method 100 further includes:
S140. The base station determines an identifier of a hotspot cell within a service range of the base station.

Optionally, S140 includes:
configuring, by the base station, the identifier of the hotspot cell within the service range of the base station; or
receiving, by the base station, the identifier that is of the hotspot cell within the service range of the base station and configured by an operation administration and maintenance (OAM) center; or
receiving, by the base station, the identifier that is of the hotspot cell within the service range of the base station and sent by the hotspot cell within the service range of the base station.

In other words, the base station may configure an identifier of a to-be-enabled hotspot cell, for example, in a scenario shown in FIG. 2A or FIG. 2B, the base station configures an identifier of a to-be-enabled cell for UE1; or an identifier of a to-be-enabled cell is configured by the OAM and is notified to the base station; or each hotspot cell sends its own identifier to the base station, for example, UE1 sends an identifier of a hotspot cell enabled by UE1 to the base station.

In S120, the base station sends the first transmission response message in response to the first transmission request message to the UE.

After receiving the first transmission request message sent by the UE, the base station sends the first transmission response message to the UE, so as to acknowledge the request of the UE. Optionally, the first transmission response message may carry the identifier of the first hotspot cell and the identifier of the first bearer.

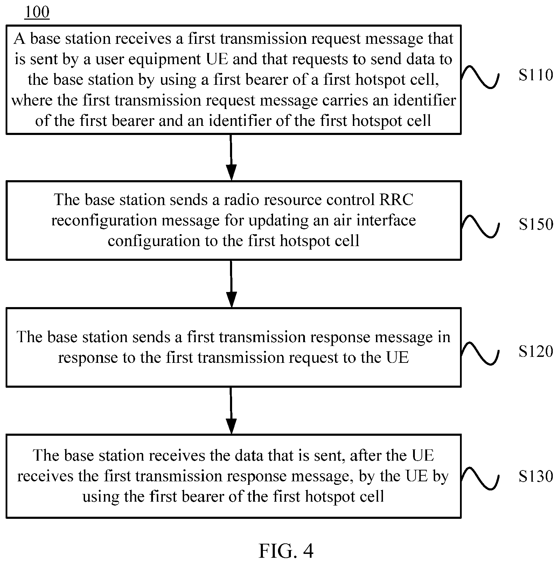

In this embodiment of the present invention, as shown in FIG. 4, optionally, before S120, the method 100 further includes:
S150. The base station sends, to the first hotspot cell, a radio resource control (RRC) reconfiguration message for updating air interface configuration.

Because the UE needs to transmit data through the first hotspot cell, the air interface configuration of the first hotspot cell may need to be updated, so as to, for example, increase a bit rate. Therefore, the base station needs to send the RRC reconfiguration message to the first hotspot cell. Optionally, the RRC reconfiguration message may carry an identifier of the UE and the identifier of the first bearer.

In S130, the base station receives the data that is sent, after the UE receives the first transmission response message, by the UE by using the first bearer of the first hotspot cell.

After the base station acknowledges the request of the UE, the UE starts to send the data through the first hotspot cell, and the base station receives the data of the first bearer through the first hotspot cell. Because the base station already learns that the data of the first bearer is the data that is sent by the UE through the first hotspot cell, the base station can learn that the data of the first bearer is from the UE. Optionally, the base station may store information about whether a bearer related to each UE is sent by another node, what bearers are transmitted by which nodes, and the like.

Therefore, in the data transmission method in this embodiment of the present invention, a base station receives a transmission request message that is sent by a UE and that requests to send data to the base station by using a bearer of a hotspot cell, so that the base station can learn that the bearer transmitted from the hotspot cell belongs to the UE, which can ensure that a subsequent related service is not interrupted when the UE leaves the hotspot cell, thereby improving user experience.

To make the UE and a selected hotspot cell be in a service range of a same base station, in this embodiment of the present invention, optionally, before S120, the method 100 further includes:
determining, by the base station, that the first hotspot cell is within the service range of the base station.

In other words, the base station sends a response message to the UE only when determining that a hotspot cell requested by the UE is within the service range of the base station. When determining that the hotspot cell requested by the UE is not within the service range of the base station, the base station rejects the request of the UE.

In this embodiment of the present invention, optionally, after S140, the method 100 further includes:
sending, by the base station, the identifier of the hotspot cell within the service range of the base station to the UE, so that the UE selects the first hotspot cell from the hotspot cell within the service range of the base station.

By using this manner, it can also be implemented that the hotspot cell selected by the UE is within the service range of the base station.

In this embodiment of the present invention, when the node that enables a hotspot cell is another UE, a UE ID of the another UE may further be used as the identifier of the hotspot cell. For example, when UE2 transmits data through UE1, the identifier of the hotspot cell may be an ID of the cell or a UE ID of UE1. When the UE ID is used, UE1 needs to notify UE2 of the UE ID of UE1.

It should be understood that, in this embodiment of the present invention, the base station may also request the UE to transmit data by using a hotspot cell. Therefore, optionally, the method 100 further includes:
sending, by the base station to the UE, a second transmission request message that requests to send data to the UE by using a second bearer of a second hotspot cell, where the second transmission request message carries an identifier of the second bearer and an identifier of the second hotspot cell;
receiving, by the base station, a second transmission response message that is sent by the UE in response to the second transmission request message; and
sending, by the base station, the data to the UE by using the second bearer of the second hotspot cell.

A scenario in which the base station requests the UE is similar to a scenario in which the UE requests the base station. For brevity, details are not described herein again.

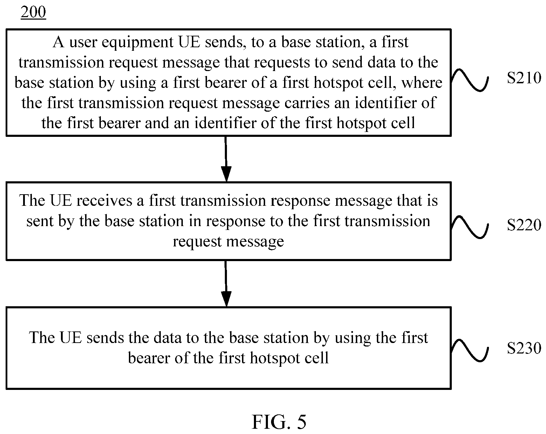

The foregoing describes in detail the data transmission method from a perspective of the base station with reference to FIG. 1 to FIG. 4, and the following describes in detail the data transmission method from a perspective of the UE with reference to FIG. 5 to FIG. 7.

FIG. 5 shows a schematic flowchart of a data transmission method 200 according to an embodiment of the present invention. As shown in FIG. 5, the method 200 includes:
S210. A user equipment (UE) sends, to a base station, a first transmission request message that requests to send data to the base station by using a first bearer of a first hotspot cell, where the first transmission request message carries an identifier of the first bearer and an identifier of the first hotspot cell.
S220. The UE receives a first transmission response message that is sent by the base station in response to the first transmission request message.
S230. The UE sends the data to the base station by using the first bearer of the first hotspot cell.

In this embodiment of the present invention, in order that the base station can learn that a data packet transmitted from a hotspot cell belongs to the UE, the UE first sends, to the base station, the first transmission request message that requests to send data to the base station by using the first bearer of the first hotspot cell, where the first transmission request message carries the identifier of the first bearer and the identifier of the first hotspot cell; and after receiving the first transmission response message sent by the base station, the UE sends the data to the base station by using the first bearer of the first hotspot cell. Because the UE notifies, by using the first transmission request message, the base station that the data will be transmitted by using the first bearer of the first hotspot cell, the base station can learn, when receiving the data that is sent by the first hotspot cell by using the first bearer, that the data of the first bearer is from the UE.

Therefore, in the data transmission method in this embodiment of the present invention, a UE sends, to a base station, a transmission request message that requests to send data to the base station by using a bearer of a hotspot cell, where the transmission request message carries an identifier of the bearer and an identifier of the hotspot cell, so that the base station can learn that the data transmitted from the hotspot cell belongs to the UE, which can ensure that a subsequent related service is not interrupted when the UE leaves the hotspot cell, thereby improving user experience.

In S210, the UE sends, to the base station, the first transmission request message that requests to send data to the base station by using the first bearer of the first hotspot cell, where the first transmission request message carries the identifier of the first bearer and the identifier of the first hotspot cell.

Specifically, when detecting a hotspot cell (for example, a hotspot cell that is enabled by another UE), the UE sends a transmission request message to the base station, where the transmission request message carries an identifier of the hotspot cell and an identifier of a bearer, such as an EPS bearer ID, so as to indicate that the UE requests to send, through the hotspot cell indicated by the identifier of the hotspot cell, the bearer indicated by the identifier of the bearer to the base station.

In S220, the UE receives the first transmission response message that is sent by the base station in response to the first transmission request message.

After receiving the first transmission request message sent by the UE, the base station sends the first transmission response message to the UE, so as to acknowledge the request of the UE. Optionally, the first transmission response message may carry the identifier of the first hotspot cell and the identifier of the first bearer.

In this embodiment of the present invention, optionally, the first transmission response message is sent by the base station after the base station sends a radio resource control (RRC) reconfiguration message for updating air interface configuration to the first hotspot cell.

In S230, the UE sends the data to the base station by using the first bearer of the first hotspot cell.

After the base station acknowledges the request of the UE, the UE starts to send the data through the first hotspot cell, and the base station receives the data of the first bearer through the first hotspot cell. Because the UE already notifies the base station that the data of the first bearer will be transmitted through the first hotspot cell, the base station can learn that the data of the first bearer is from the UE.

Therefore, in the data transmission method in this embodiment of the present invention, a UE sends, to a base station, a transmission request message that requests to send data to the base station by using a bearer of a hotspot cell, so that the base station can learn that the bearer transmitted from the hotspot cell belongs to the UE, which can ensure that a subsequent related service is not interrupted when the UE leaves the hotspot cell, thereby improving user experience.

To make the UE and a selected hotspot cell be in a service range of a same base station, in this embodiment of the present invention, optionally, the first transmission response message is sent by the base station after the base station determines that the first hotspot cell is within a service range of the base station.

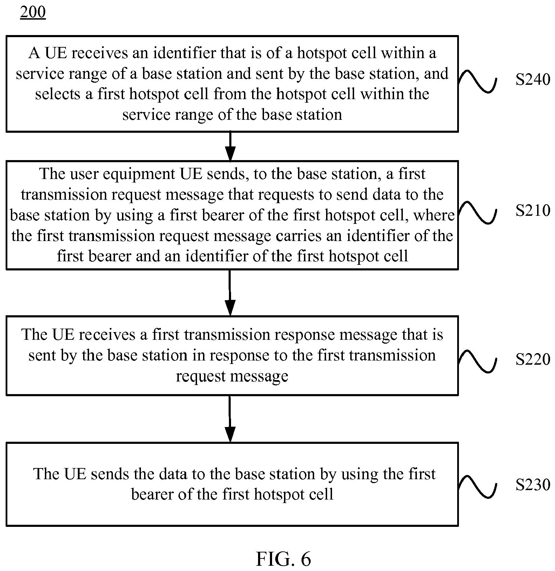

In this embodiment of the present invention, as shown in FIG. 6, optionally, before S210, the method 200 further includes:
S240. The UE receives an identifier that is of a hotspot cell within a service range of the base station and sent by the base station, and selects the first hotspot cell from the hotspot cell within the service range of the base station.

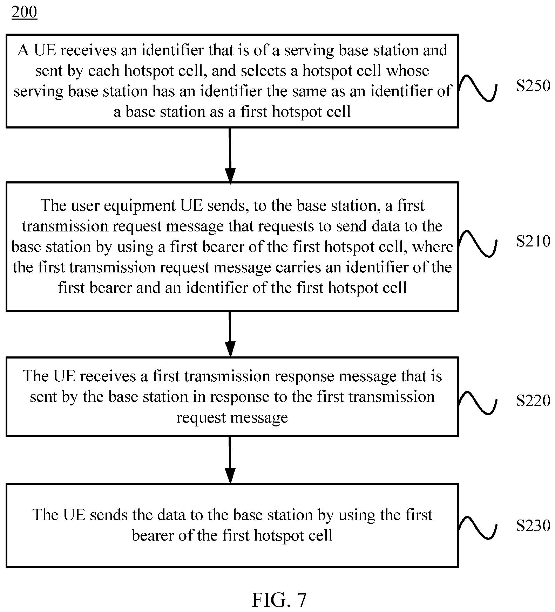

Alternatively, in this embodiment of the present invention, as shown in FIG. 7, optionally, before S210, the method 200 further includes:
S250. The UE receives an identifier that is of a serving base station and sent by each hotspot cell, and selects a hotspot cell whose serving base station has an identifier the same as an identifier of the base station as the first hotspot cell.

By using these manners, it can be implemented that both the hotspot cell selected by the UE and the UE are within the service range of the base station.

It should be understood that, in this embodiment of the present invention, the base station may also request the UE to transmit data by using a hotspot cell. Therefore, optionally, the method 200 further includes:
receiving, by the UE, a second transmission request message that is sent by the base station and requests to send data to the UE by using a second bearer of a second hotspot cell, where the second transmission request message carries an identifier of the second bearer and an identifier of the second hotspot cell;
sending, by the UE, a second transmission response message in response to the second transmission request message to the base station; and
receiving, by the UE, the data that is sent, after the base station receives the second transmission response message, by the base station by using the second bearer of the second hotspot cell.

It should be understood that in this embodiment of the present invention, interaction among the base station, the UE, and the node that enables a hotspot cell, related characteristics and functions, and the like that are described on a base station side correspond to descriptions on a UE side. For brevity, details are not described herein again.

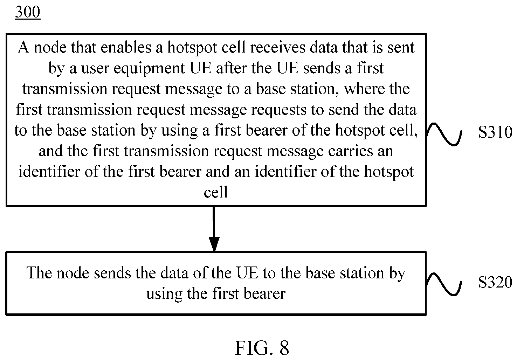

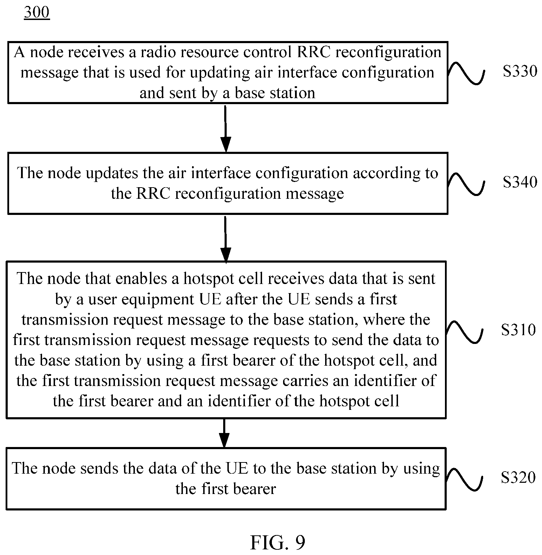

The foregoing describes in detail the data transmission method from a perspective of the base station with reference to FIG. 1 to FIG. 4, and describes in detail the data transmission method from a perspective of the UE with reference to FIG. 5 to FIG. 7. The following describes in detail the data transmission method from a perspective of a node that enables a hotspot cell with reference to FIG. 8 and FIG. 9.

FIG. 8 shows a schematic flowchart of a data transmission method 300 according to an embodiment of the present invention. As shown in FIG. 8, the method 300 includes:
S310. A node that enables a hotspot cell receives data that is sent by a user equipment (UE) after the UE sends a first transmission request message to a base station, where the first transmission request message requests to send the data to the base station by using a first bearer of the hotspot cell, and the first transmission request message carries an identifier of the first bearer and an identifier of the hotspot cell.
S320. The node sends the data of the UE to the base station by using the first bearer.

In this embodiment of the present invention, before the node that enables a hotspot cell receives the data sent by the UE, the UE already notifies, by using the first transmission request message, the base station that the data will be transmitted by using the first bearer of the hotspot cell. Therefore, when the node sends the data to the base station by using the first bearer, the base station can learn that the data of the first bearer is from the UE.

Therefore, in the data transmission method in this embodiment of the present invention, a UE sends, to a base station, a transmission request message that requests to send data to the base station by using a bearer of a hotspot cell, where the transmission request message carries an identifier of the bearer and an identifier of the hotspot cell, so that the base station can learn that the bearer transmitted from the hotspot cell belongs to the UE, which can ensure that a subsequent related service is not interrupted when the UE leaves the hotspot cell, thereby improving user experience.

In this embodiment of the present invention, as shown in FIG. 9, optionally, before S310, the method 300 further includes:
S330. The node receives a radio resource control (RRC) reconfiguration message that is used for updating air interface configuration and sent by the base station.
S340. The node updates the air interface configuration according to the RRC reconfiguration message.

Because the UE needs to transmit data through the node, the air interface configuration of the node may need to be updated, so as to, for example, increase a bit rate. Therefore, the node needs to receive the RRC reconfiguration message sent by the base station, and update the air interface configuration according to the RRC reconfiguration message. Optionally, the RRC reconfiguration message may carry an identifier of the UE and the identifier of the first bearer.

In the embodiment of the present invention, optionally, before S310, the method 300 further includes:
sending, by the node, the identifier of the hotspot cell to the base station; or
receiving, by the node, the identifier that is of the hotspot cell and configured by the base station; or
receiving, by the node, the identifier that is of the hotspot cell and configured by an operation administration and maintenance (OAM) center.

In other words, the node (for example, UE1) may send an identifier of a hotspot cell enabled by the node to the base station; or the base station may configure an identifier of a to-be-enabled hotspot cell for the node, for example, the base station configures an identifier of a to-be-enabled cell for UE1; or the OAM configures an identifier of a to-be-enabled hotspot cell for the node, and notifies the base station.

In the embodiment of the present invention, optionally, before S310, the method 300 further includes:
sending, by the node, an identifier of the base station to the UE, so that the UE determines that the node is within a service range of the base station.

In this embodiment of the present invention, optionally, the method 300 further includes:
receiving, by the node, data that is sent by the base station after the base station sends a second transmission request message to the UE, where the second transmission request message requests to send the data to the UE by using a second bearer of the hotspot cell, and the second transmission request message carries an identifier of the second bearer and the identifier of the hotspot cell; and
sending, by the node, the data of the base station to the UE by using the second bearer.

It should be understood that in this embodiment of the present invention, interaction among the base station, the UE, and the node that enables a hotspot cell, related characteristics and functions, and the like that are described on a base station side correspond to descriptions on a node side that enables a hotspot cell. For brevity, details are not described herein again.

The foregoing describes in detail the data transmission method separately from perspectives of the base station, the UE, and the node that enables a hotspot cell, and the following describes in detail the embodiments of the present invention with reference to specific examples. It should be noted that, these example are merely used to help a person skilled in the art better understand the embodiments of the present invention, but are not intended to limit the scope of the embodiments of the present invention.

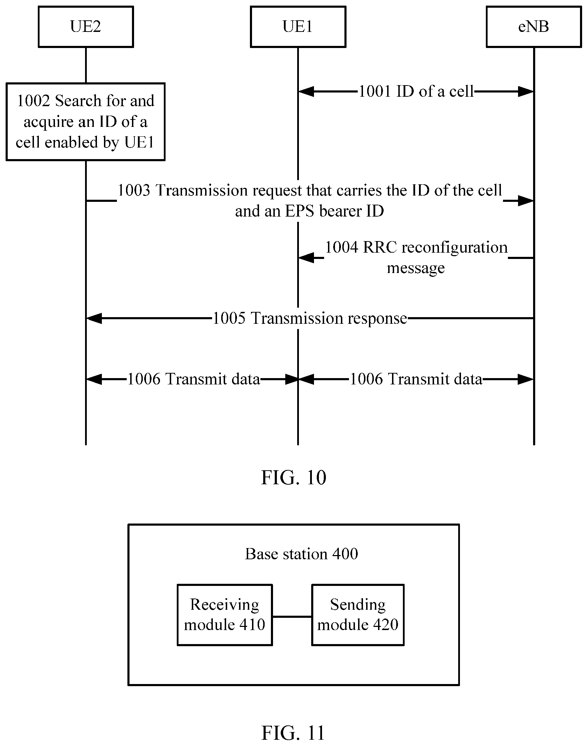

For example, in a scenario shown in FIG. 2A or FIG. 2B, UE2 communicates with an eNB through a WiFi cell or an LTE cell that is enabled by UE1. A specific process is shown in FIG. 10.

1001. UE1 sends an ID of a cell enabled by UE1 to the eNB, or the eNB configures an ID of a to-be-enabled cell for UE1. For example, the ID of the cell may be a service set identifier (Service Set Identifier, "SSID" for short) of a WiFi cell, or an evolved universal terrestrial radio access network (evolved universal terrestrial radio access network, "E-UTRAN" for short) cell global identifier (E-UTRAN Cell Global Identifier, "ECGI" for short) or a physical cell identifier (Physical Cell Identifier, "PCI" for short) of an LTE cell.

1002. UE2 acquires, by means of searching, the ID of the cell enabled by UE1.

1003. UE2 sends a transmission request to the eNB, where the transmission request carries the ID of the cell and an EPS bearer ID, which indicate that UE2 requests to send, through the cell indicated by the ID of the cell, a bearer indicated by the EPS bearer ID to a network side.

1004. The eNB sends an RRC reconfiguration message to UE1, to update air interface configuration of UE1. Optionally, the RRC reconfiguration message may carry an ID of UE2 and the EPS bearer ID.

1005. The eNB sends a transmission response to UE2. Optionally, the transmission response may carry the ID of the cell and the EPS bearer ID.

1006. UE2 starts to transmit data by using the cell enabled by UE1.

Therefore, in the data transmission method in this embodiment of the present invention, a UE sends, to a base station, a transmission request message that requests to send data to the base station by using a bearer of a hotspot cell, where the transmission request message carries an identifier of the bearer and an identifier of the hotspot cell, so that the base station can learn that the bearer transmitted from the hotspot cell belongs to the UE, which can ensure that a subsequent related service is not interrupted when the UE leaves the hotspot cell, thereby improving user experience.

It should be understood that in various embodiments of the present invention, sequence numbers of the foregoing processes do not mean execution sequences. The execution sequences of the processes should be determined according to functions and internal logic of the processes, and should not be construed as any limitation on the implementation processes of the embodiments of the present invention.

With reference to FIG. 1 to FIG. 10, the foregoing describes in detail the data transmission method according to the embodiments of the present invention. With reference to FIG. 11 to FIG. 17, the following describes a base station, a user equipment, and a communications apparatus that enables a hotspot cell according to the embodiments of the present invention.

FIG. 11 shows a schematic block diagram of a base station 400 according to an embodiment of the present invention. As shown in FIG. 11, the base station 400 includes:
a receiving module 410, configured to receive a first transmission request message that is sent by a user equipment (UE) and requests to send data to the base station by using a first bearer of a first hotspot cell, where the first transmission request message carries an identifier of the first bearer and an identifier of the first hotspot cell; and
a sending module 420, configured to send a first transmission response message in response to the first transmission request message to the UE; where
the receiving module 410 is further configured to receive the data that is sent, after the UE receives the first transmission response message, by the UE by using the first bearer of the first hotspot cell.

Therefore, the base station in this embodiment of the present invention receives a transmission request message that is sent by a UE and that requests to send data to the base station by using a bearer of a hotspot cell, where the transmission request message carries an identifier of the bearer and an identifier of the hotspot cell, so that the base station can learn that the data transmitted from the hotspot cell belongs to the UE, which can ensure that a subsequent related service is not interrupted when the UE leaves the hotspot cell, thereby improving user experience.

In this embodiment of the present invention, optionally, the sending module 420 is further configured to: before sending the first transmission response message in response to the first transmission request message to the UE, send a radio resource control (RRC) reconfiguration message for updating air interface configuration to the first hotspot cell.

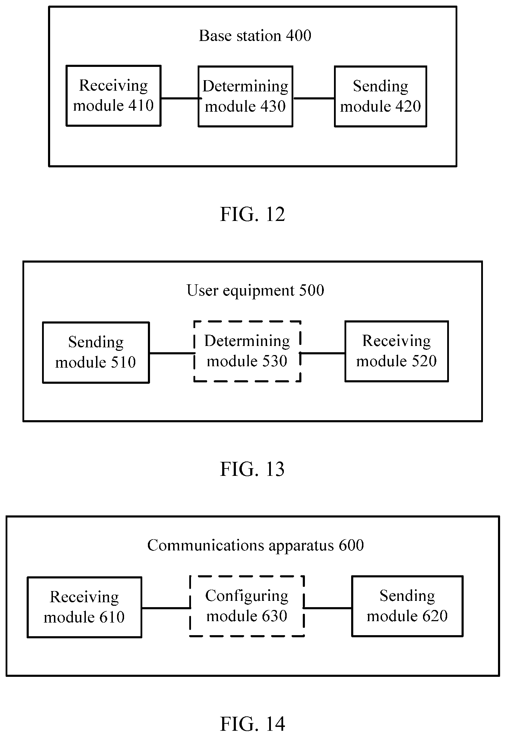

In this embodiment of the present invention, as shown in FIG. 12, optionally, the base station 400 further includes:
a determining module 430, configured to: before the receiving module 410 receives the first transmission request message that is sent by the user equipment (UE) and that requests to send the data to the base station by using the first bearer of the first hotspot cell, determine an identifier of a hotspot cell within a service range of the base station.

Optionally, the determining module 430 is specifically configured to configure the identifier of the hotspot cell within the service range of the base station; or determine the identifier that is of the hotspot cell within the service range of the base station, configured by an operation administration and maintenance (OAM) center, and received by the receiving module 410; or determine the identifier that is of the hotspot cell within the service range of the base station, sent by the hotspot cell within the service range of the base station, and received by the receiving module 410.

Optionally, the determining module 430 is further configured to: before the sending module 420 sends the first transmission response message in response to the first transmission request message to the UE, determine that the first hotspot cell is within the service range of the base station.

Optionally, the sending module 420 is further configured to send the identifier of the hotspot cell within the service range of the base station to the UE, so that the UE selects the first hotspot cell from the hotspot cell within the service range of the base station.

Optionally, the sending module 420 is further configured to send, to the UE, a second transmission request message that requests to send data to the UE by using a second bearer of a second hotspot cell, where the second transmission request message carries an identifier of the second bearer and an identifier of the second hotspot cell;
the receiving module 410 is further configured to receive a second transmission response message that is sent by the UE in response to the second transmission request message; and
the sending module 420 is further configured to send the data to the UE by using the second bearer of the second hotspot cell.

In this embodiment of the present invention, optionally, a node that enables the first hotspot cell or the second hotspot cell includes:
another UE, a wireless-fidelity access point (WiFi AP), a micro base station (Pico eNB), a home NodeB (HeNB), or a relay point (Relay).

Therefore, the base station in this embodiment of the present invention receives a transmission request message that is sent by a UE and that requests to send data to the base station by using a bearer of a hotspot cell, so that the base station can learn that the bearer transmitted from the hotspot cell belongs to the UE, which can ensure that a subsequent related service is not interrupted when the UE leaves the hotspot cell, thereby improving user experience.

The base station 400 according to this embodiment of the present invention may correspond to a base station in a data transmission method in an embodiment of the present invention, and the foregoing and other operations and/or functions of modules in the base station 400 are separately used to implement corresponding procedures of the methods in FIG. 1 to FIG. 10. For brevity, details are not described herein again.

FIG. 13 shows a schematic block diagram of a user equipment 500 according to an embodiment of the present invention. As shown in FIG. 13, the user equipment 500 includes:
a sending module 510, configured to send, to a base station, a first transmission request message that requests to send data to the base station by using a first bearer of a first hotspot cell, where the first transmission request message carries an identifier of the first bearer and an identifier of the first hotspot cell; and
a receiving module 520, configured to receive a first transmission response message that is sent by the base station in response to the first transmission request message; where
the sending module 510 is further configured to send the data to the base station by using the first bearer of the first hotspot cell.

Therefore, the user equipment in this embodiment of the present invention sends, to a base station, a transmission request message that requests to send data to the base station by using a bearer of a hotspot cell, where the transmission request message carries an identifier of the bearer and an identifier of the hotspot cell, so that the base station can learn that the data transmitted from the hotspot cell belongs to the UE, which can ensure that a subsequent related service is not interrupted when the UE leaves the hotspot cell, thereby improving user experience.

Optionally, the first transmission response message is sent by the base station after the base station sends a radio resource control (RRC) reconfiguration message for updating air interface configuration to the first hotspot cell.

Optionally, the first transmission response message is sent by the base station after the base station determines that the first hotspot cell is within a service range of the base station.

Optionally, the receiving module 520 is further configured to: before the sending module 510 sends, to the base station, the first transmission request message that requests to send the data to the base station by using the first bearer of the first hotspot cell, receive an identifier that is of a hotspot cell within a service range of the base station and sent by the base station, or receive an identifier that is of a serving base station and sent by each hotspot cell.

As shown in FIG. 13, the user equipment 500 further includes:
a determining module 530, configured to select the first hotspot cell from the hotspot cell within the service range of the base station, or select a hotspot cell whose serving base station has an identifier the same as an identifier of the base station as the first hotspot cell.

Optionally, the receiving module 520 is further configured to receive a second transmission request message that is sent by the base station and that requests to send data to the UE by using a second bearer of a second hotspot cell, where the second transmission request message carries an identifier of the second bearer and an identifier of the second hotspot cell;
the sending module 510 is further configured to send a second transmission response message in response to the second transmission request message to the base station; and
the receiving module 520 is further configured to receive the data that is sent, after the base station receives the second transmission response message, by the base station by using the second bearer of the second hotspot cell.

Optionally, a node that enables the first hotspot cell or the second hotspot cell includes:
another UE, a wireless-fidelity access point (WiFi AP), a micro base station (Pico eNB), a home NodeB (HeNB), or a relay point (Relay).

Therefore, the UE in this embodiment of the present invention sends, to a base station, a transmission request message that requests to send data to the base station by using a bearer of a hotspot cell, so that the base station can learn that the bearer transmitted from the hotspot cell belongs to the UE, which can ensure that a subsequent related service is not interrupted when the UE leaves the hotspot cell, thereby improving user experience.

The user equipment 500 according to this embodiment of the present invention may correspond to the UE in a data transmission method in an embodiment of the present invention, and the foregoing and other operations and/or functions of modules in the user equipment 500 are separately used to implement corresponding procedures of the methods in FIG. 1 to FIG. 10. For brevity, details are not described herein again.

FIG. 14 shows a schematic block diagram of a communications apparatus 600 according to an embodiment of the present invention. As shown in FIG. 14, the communications apparatus 600 includes:
a receiving module 610, configured to: when the communications apparatus enables a hotspot cell, receive data that is sent by a user equipment (UE) after the UE sends a first transmission request message to a base station, where the first transmission request message requests to send the data to the base station by using a first bearer of the hotspot cell, and the first transmission request message carries an identifier of the first bearer and an identifier of the hotspot cell; and
a sending module 620, configured to send the data of the UE to the base station by using the first bearer.

By enabling a hotspot cell, the communications apparatus in this embodiment of the present invention receives data that is sent by a UE after the UE sends, to a base station, a first transmission request message that requests to send the data by using a first bearer of the hotspot cell; and sends the data of the UE to the base station by using the first bearer, so that the base station can learn that the data transmitted from the hotspot cell belongs to the UE, which can ensure that a subsequent related service is not interrupted when the UE leaves the hotspot cell, thereby improving user experience.

Optionally, the receiving module 610 is further configured to: before receiving the data sent by the user equipment (UE), receive a radio resource control (RRC) reconfiguration message that is used for updating air interface configuration and sent by the base station.

As shown in FIG. 14, the communications apparatus 600 further includes:
a configuring module 630, configured to update the air interface configuration according to the RRC reconfiguration message.

Optionally, before the receiving module 610 receives the data sent by the user equipment (UE), the sending module 620 is further configured to send the identifier of the hotspot cell to the base station; or
the receiving module 610 is further configured to receive the identifier that is of the hotspot cell and configured by the base station; or
the receiving module 610 is further configured to receive the identifier that is of the hotspot cell and configured by an operation administration and maintenance (OAM) center.

Optionally, the sending module 620 is further configured to send an identifier of the base station to the UE before the receiving module 610 receives the data that is sent by the user equipment (UE), so that the UE determines that the communications apparatus is within a service range of the base station.

Optionally, the receiving module 610 is further configured to receive data that is sent by the base station after the base station sends a second transmission request message to the UE, where the second transmission request message requests to send the data to the UE by using a second bearer of the hotspot cell, and the second transmission request message carries an identifier of the second bearer and the identifier of the hotspot cell; and
the sending module 620 is further configured to send the data of the base station to the UE by using the second bearer.

Optionally, the communications apparatus 600 is another UE, a wireless-fidelity access point (WiFi AP), a micro base station (Pico eNB), a home NodeB (HeNB), or a relay point (Relay).

The communications apparatus 600 according to this embodiment of the present invention may correspond to a node in a data transmission method in an embodiment of the present invention, and the foregoing and other operations and/or functions of modules in the communications apparatus 600 are separately used to implement corresponding procedures of the methods in FIG. 1 to FIG. 10. For brevity, details are not described herein again.

In hardware implementation, the foregoing sending module may be a transmitter or a transceiver, the foregoing receiving module may be a receiver or a transceiver, and the sending module and the receiving module may be integrated to constitute a transceiving module, which corresponds to a transceiver implemented by hardware. The foregoing determining module or the configuring module may be, in a hardware form, built in or independent of a processor of the user equipment or the base station, and may also be stored, in a software form, in a memory, so as to be invoked by a processor to perform an operation corresponding to each module. The processor may be a central processing unit (CPU), or a single-chip microcomputer.

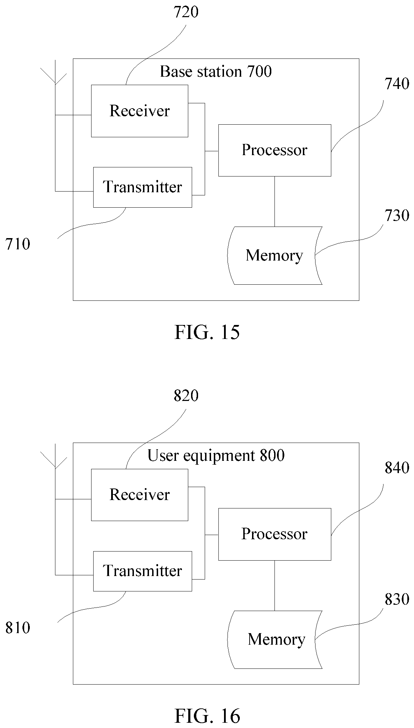

FIG. 15 is a schematic structural diagram of a base station 700 according to an embodiment of the present invention. As shown in FIG. 15, the base station 700 includes a transmitter 710, a receiver 720, a memory 730, and a processor 740 that is connected to the transmitter 710, the receiver 720, and the memory 730. Certainly, the base station 700 may further include general components, such as an antenna, a baseband processing component, an intermediate radio frequency processing component, and an input/output apparatus. This embodiment of the present invention sets no limitation thereto.

The memory 730 stores a group of program code, and the processor 740 is configured to invoke the program code stored in the memory 730, so as to execute the data transmission method 100 according to an embodiment of the present invention.

FIG. 16 is a schematic structural diagram of a user equipment 800 according to an embodiment of the present invention. As shown in FIG. 16, the user equipment 800 includes a transmitter 810, a receiver 820, a memory 830, and a processor 840 that is connected to the transmitter 810, the receiver 820, and the memory 830. Certainly, the user equipment 800 may further include general components, such as an antenna, and an input/output apparatus. This embodiment of the present invention sets no limitation thereto.

The memory 830 stores a group of program code, and the processor 840 is configured to invoke the program code stored in the memory 830, so as to execute the data transmission method 200 according to an embodiment of the present invention.

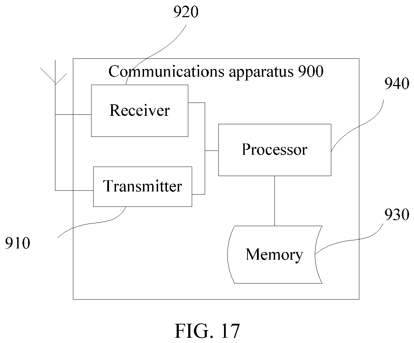

FIG. 17 is a schematic structural diagram of a communications apparatus 900 according to an embodiment of the present invention. As shown in FIG. 17, the communications apparatus 900 includes a transmitter 910, a receiver 920, a memory 930, and a processor 940 that is connected to the transmitter 910, the receiver 920, and the memory 930. The communications apparatus 900 may further include general components, such as an antenna and an input/output apparatus. This embodiment of the present invention sets no limitation thereto.

The memory 930 stores a group of program code, and the processor 940 is configured to invoke the program code stored in the memory 930, so as to execute the data transmission method 300 according to an embodiment of the present invention.

An embodiment of the present invention further provides a computer program product, where the readable medium includes a group of program code, so as to execute the data transmission method according to the embodiments of the present invention.

It should be understood that, the term "and/or" in this embodiment of the present invention describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

A person of ordinary skill in the art may be aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments of the present invention.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in the form of a software product. The software product is stored in a storage medium and includes several instructions for instructing a computer device (which may be a personal computer, a server, or a network device) to perform all or a part of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

## Claims

1. A data transmission method, comprising:
receiving (S110), by a base station, a first transmission request message that is sent by a user equipment, UE, and requests to send data to the base station by using a first bearer of a first hotspot cell, wherein the first transmission request message carries an identifier of the first bearer and an identifier of the first hotspot cell;
sending (S120), by the base station, a first transmission response message in response to the first transmission request message to the UE; and
receiving (S130), by the base station, the data that is sent, after the UE receives the first transmission response message, by the UE by using the first bearer of the first hotspot cell.

2. The method according to claim 1, wherein before the sending (S120), by the base station, a first transmission response message in response to the first transmission request message to the UE, the method further comprises:
sending (S150), by the base station to the first hotspot cell, a radio resource control, RRC, reconfiguration message for updating air interface configuration.

3. The method according to claim 1 or 2, wherein before the receiving (S110), by a base station, a first transmission request message that is sent by a user equipment, UE, and requests to send data to the base station by using a first bearer of a first hotspot cell, the method further comprises:
determining (S140), by the base station, an identifier of a hotspot cell within a service range of the base station.

4. The method according to claim 3, wherein before the sending (S120), by the base station, a first transmission response message in response to the first transmission request message to the UE, the method further comprises:
determining, by the base station, that the first hotspot cell is within the service range of the base station.

5. The method according to claim 3, wherein after the determining (S140), by the base station, an identifier of a hotspot cell within a service range of the base station, the method further comprises:
sending, by the base station, the identifier of the hotspot cell within the service range of the base station to the UE, so that the UE selects the first hotspot cell from the hotspot cell within the service range of the base station.

6. A data transmission method, comprising:
sending (S210), by a user equipment, UE, to a base station, a first transmission request message that requests to send data to the base station by using a first bearer of a first hotspot cell, wherein the first transmission request message carries an identifier of the first bearer and an identifier of the first hotspot cell;
receiving (S220), by the UE, a first transmission response message that is sent by the base station in response to the first transmission request message; and
sending (S230), by the UE, the data to the base station by using the first bearer of the first hotspot cell.

7. The method according to claim 6, wherein the first transmission response message is sent by the base station after the base station determines that the first hotspot cell is within a service range of the base station.

8. The method according to claim 6, wherein before the sending (S210), by a user equipment, UE, to a base station, a first transmission request message that requests to send data to the base station by using a first bearer of a first hotspot cell, the method further comprises:
receiving (S240), by the UE, an identifier that is of a hotspot cell within a service range of the base station and sent by the base station, and selecting the first hotspot cell from the hotspot cell within the service range of the base station; or
receiving (S250), by the UE, an identifier that is of a serving base station and sent by each hotspot cell, and selecting a hotspot cell whose serving base station has an identifier the same as an identifier of the base station as the first hotspot cell.

9. A data transmission method, comprising:
receiving (S310), by a node that enables a hotspot cell, data that is sent by a user equipment, UE, after the UE sends a first transmission request message to a base station, wherein the first transmission request message requests to send the data to the base station by using a first bearer of the hotspot cell, and the first transmission request message carries an identifier of the first bearer and an identifier of the hotspot cell; and
sending (S320), by the node, the data of the UE to the base station by using the first bearer.

10. The method according to claim 9, wherein before the receiving (S310), by a node that enables a hotspot cell, data that is sent by a user equipment, UE, the method further comprises:
receiving (S330), by the node, a radio resource control, RRC, reconfiguration message that is used for updating air interface configuration and sent by the base station; and
updating (S340), by the node, the air interface configuration according to the RRC reconfiguration message.

11. The method according to claim 9 or 10, wherein before the receiving (S310), by a node that enables a hotspot cell, data that is sent by a user equipment, UE, the method further comprises:
sending, by the node, the identifier of the hotspot cell to the base station; or
receiving, by the node, the identifier that is of the hotspot cell and configured by the base station; or
receiving, by the node, the identifier that is of the hotspot cell and configured by an operation administration and maintenance, OAM, center.

12. The method according to any one of claims 9 to 11, wherein before the receiving (S310), by a node that enables a hotspot cell, data that is sent by a user equipment UE, the method further comprises:
sending, by the node, an identifier of the base station to the UE, so that the UE determines that the node is within a service range of the base station.

13. A base station (700), comprising a transmitter (710), a receiver (720), a memory (730), and a processor (740) that is connected to the transmitter (710), the receiver (720), and the memory (730), wherein the memory (730) stores a group of program code, and the processor (740) is configured to invoke the program code stored in the memory (730), so as to execute the method according to any one of claims 1 to 5.

14. A user equipment (800), comprising a transmitter (810), a receiver (820), a memory (830), and a processor (840) that is connected to the transmitter (810), the receiver (820), and the memory (830), wherein the memory (830) stores a group of program code, and the processor (840) is configured to invoke the program code stored in the memory, (830) so as to execute the method according to any one of claims 6 to 8.

15. A communications apparatus (900), comprising a transmitter (910), a receiver (920), a memory (930), and a processor (940) that is connected to the transmitter (910), the receiver (920), and the memory (930), wherein the memory (930) stores a group of program code, and the processor (940) is configured to invoke the program code stored in the memory (930), so as to execute the method according to any one of claims 9 to 12.

## Patentansprüche

1. Datenübertragungsverfahren, umfassend:
Empfangen (S110), durch eine Basisstation, einer ersten Übertragungsanforderungsnachricht, die durch ein Benutzergerät UE gesendet wird und anfordert, Daten zu der Basisstation zu senden, indem ein erster Träger einer ersten "Hotspot"-Zelle verwendet wird, wobei die erste Übertragungsanforderungsnachricht eine Kennung des ersten Trägers und eine Kennung der ersten "Hotspot"-Zelle führt;
Senden (S120), durch die Basisstation, einer ersten Übertragungsantwortnachricht als Reaktion auf die erste Übertragungsanforderungsnachricht an das UE; und
Empfangen (S130), durch die Basisstation, der Daten, die, nachdem das UE die erste Übertragungsantwortnachricht empfängt, durch das UE unter Verwendung des ersten Trägers der ersten "Hotspot"-Zelle gesendet werden.

2. Verfahren nach Anspruch 1, wobei das Verfahren vor dem Senden (S120), durch die Basisstation, einer ersten Übertragungsantwortnachricht als Reaktion auf die erste Übertragungsanforderungsnachricht an das UE ferner Folgendes umfasst:
Senden (S150), durch die Basisstation zu der ersten "Hotspot"-Zelle, einer Umkonfigurationsnachricht der Funkressourcensteuerung RRC zur Aktualisierung der Funkschnittstellenkonfiguration.

3. Verfahren nach Anspruch 1 oder 2, wobei das Verfahren vor dem Empfangen (S110), durch eine Basisstation, einer ersten Übertragungsanforderungsnachricht, die durch ein Benutzergerät UE gesendet wird und anfordert, Daten zu der Basisstation zu senden, indem ein erster Träger einer ersten "Hotspot"-Zelle verwendet wird, ferner Folgendes umfasst:
Bestimmen (S140), durch die Basisstation, einer Kennung einer "Hotspot"-Zelle innerhalb einer Dienstreichweite der Basisstation.

4. Verfahren nach Anspruch 3, wobei das Verfahren vor dem Senden (S120), durch die Basisstation, einer ersten Übertragungsantwortnachricht als Reaktion auf die erste Übertragungsanforderungsnachricht an das UE ferner Folgendes umfasst:
Bestimmen, durch die Basisstation, dass sich die erste "Hotspot"-Zelle in der Dienstreichweite der Basisstation befindet.

5. Verfahren nach Anspruch 3, wobei das Verfahren nach dem Bestimmen (S140), durch die Basisstation, einer Kennung einer "Hotspot"-Zelle innerhalb einer Dienstreichweite der Basisstation ferner Folgendes umfasst:
Senden, durch die Basisstation, der Kennung der "Hotspot"-Zelle in der Dienstreichweite der Basisstation zum UE, so dass das UE die erste ""Hotspot"-Zelle aus der "Hotspot"-Zelle in der Dienstreichweite der Basisstation auswählt.

6. Datenübertragungsverfahren, umfassend:
Senden (S210), durch eine Benutzergerät UE zu einer Basisstation, einer ersten Übertragungsanforderungsnachricht, die anfordert, Daten zur Basisstation zu senden, durch Verwendung eines ersten Trägers einer ersten "Hotspot"-Zelle, wobei die erste Übertragungsanforderungsnachricht eine Kennung des ersten Trägers und eine Kennung der ersten "Hotspot"-Zelle führt;
Empfangen (S220), durch das UE, einer ersten Übertragungsantwortnachricht, die durch die Basisstation als Reaktion auf die erste Übertragungsanforderungsnachricht gesendet wird; und
Senden (S230), durch das UE, der Daten zur Basisstation durch Verwendung des ersten Trägers der ersten "Hotspot"-Zelle.

7. Verfahren nach Anspruch 6, wobei die erste Übertragungsantwortnachricht durch die Basisstation gesendet wird, nachdem die Basisstation bestimmt, dass sich die erste "Hotspot"-Zelle in einer Dienstreichweite der Basisstation befindet.

8. Verfahren nach Anspruch 6, wobei das Verfahren vor dem Senden (S210), durch ein Benutzergerät UE zu einer Basisstation, einer ersten Übertragungsanforderungsnachricht, die anfordert, Daten zur Basisstation zu senden, durch Verwendung eines ersten Trägers einer ersten "Hotspot"-Zelle, ferner Folgendes umfasst:
Empfangen (S240), durch das UE, einer Kennung, die von einer "Hotspot"-Zelle in einer Dienstreichweite der Basisstation ist und durch die Basisstation gesendet wird, und Auswählen der ersten "Hotspot"-Zelle aus der "Hotspot"-Zelle in der Dienstreichweite der Basisstation; oder
Empfangen (S250), durch das UE, einer Kennung, die von einer versorgenden Basisstation ist und durch jede "Hotspot"-Zelle gesendet wird, und Auswählen einer "Hotspot"-Zelle, deren versorgende Basisstation eine Kennung aufweist, die dieselbe wie eine Kennung der Basisstation wie bei der ersten "Hotspot"-Zelle ist.

9. Datenübertragungsverfahren, umfassend:
Empfangen (S310), durch einen Knoten, der eine "Hotspot"-Zelle aktiviert, von Daten, die durch ein Benutzergerät UE gesendet werden, nachdem das UE eine erste Übertragungsanforderungsnachricht zu einer Basisstation sendet, wobei die erste Übertragungsanforderungsnachricht anfordert, die Daten zur Basisstation zu senden, indem ein erster Träger der "Hotspot"-Zelle verwendet wird, und die erste Übertragungsanforderungsnachricht eine Kennung des ersten Trägers und eine Kennung der "Hotspot"-Zelle führt; und
Senden (S320), durch den Knoten, der Daten des UE zur Basisstation durch Verwendung des ersten Trägers.

10. Verfahren nach Anspruch 9, wobei das Verfahren vor dem Empfangen (S310), durch einen Knoten, der eine "Hotspot"-Zelle aktiviert, von Daten, die durch ein Benutzergerät UE gesendet werden, ferner Folgendes umfasst:
Empfangen (S330), durch den Knoten, einer Umkonfigurationsnachricht der Funkressourcensteuerung RRC, die zum Aktualisieren der Funkschnittstellenkonfiguration verwendet und durch die Basisstation gesendet wird; und
Aktualisieren (S340), durch den Knoten, der Funkschnittstellenkonfiguration gemäß der RRC-Umkonfigurationsnachricht.

11. Verfahren nach Anspruch 9 oder 10, wobei das Verfahren vor dem Empfangen (S310), durch einen Knoten, der eine "Hotspot"-Zelle aktiviert, von Daten, die durch ein Benutzergerät UE gesendet werden, ferner Folgendes umfasst:
Senden, durch den Knoten, der Kennung der "Hotspot"-Zelle zur Basisstation; oder Empfangen, durch den Knoten, der Kennung, die von der "Hotspot"-Zelle ist und
durch die Basisstation konfiguriert wird; oder
Empfangen, durch den Knoten, der Kennung, die von der "Hotspot"-Zelle ist und durch eine "Operation Administration and Maintenance"- bzw. OAM-Stelle konfiguriert wird.

12. Verfahren nach Anspruch 9 bis 11, wobei das Verfahren vor dem Empfangen (S310), durch einen Knoten, der eine "Hotspot"-Zelle aktiviert, von Daten, die durch ein Benutzergerät UE gesendet werden, ferner Folgendes umfasst:
Senden, durch den Knoten, einer Kennung der Basisstation zum UE, so dass das UE bestimmt, dass der Knoten sich in einer Dienstreichweite der Basisstation befindet.

13. Basisstation (700), die einen Sender (710), einen Empfänger (720), einen Speicher (730) und einen Prozessor (740), der mit dem Sender (710), dem Empfänger (720) und dem Speicher (730) verbunden ist, umfasst, wobei der Speicher (730) eine Programmcodegruppe speichert und der Prozessor (740) ausgelegt ist zum Aufrufen des in dem Speicher (730) gespeicherten Programmcodes, um so das Verfahren nach einem der Ansprüche 1 bis 5 auszuführen.

14. Benutzergerät (800), das einen Sender (810), einen Empfänger (820), einen Speicher (830) und einen Prozessor (840), der mit dem Sender (810), dem Empfänger (820) und dem Speicher (830) verbunden ist, umfasst, wobei der Speicher (830) eine Programmcodegruppe speichert und der Prozessor (840) ausgelegt ist zum Aufrufen des in dem Speicher (830) gespeicherten Programmcodes, um so das Verfahren nach einem der Ansprüche 6 bis 8 auszuführen.

15. Kommunikationsvorrichtung (900), die einen Sender (910), einen Empfänger (920), einen Speicher (930) und einen Prozessor (940), der mit dem Sender (910), dem Empfänger (920) und dem Speicher (930) verbunden ist, umfasst, wobei der Speicher (930) eine Programmcodegruppe speichert und der Prozessor (940) ausgelegt ist zum Aufrufen des in dem Speicher (930) gespeicherten Programmcodes, um so das Verfahren nach einem der Ansprüche 9 bis 12 auszuführen.

## Revendications

1. Procédé de transmission de données, comprenant les étapes suivantes :
réception (S110), par une station de base, d'un premier message de requête de transmission envoyé par un équipement utilisateur, noté UE, et sollicitant l'envoi de données à la station de base au moyen d'un premier support d'une première cellule de type hotspot, le premier message de requête de transmission véhiculant un identifiant du premier support et un identifiant de la première cellule de type hotspot ;
envoi (S120), par la station de base, à l'UE, d'un premier message de réponse de transmission en réponse au premier message de requête de transmission ; et
réception (S130), par la station de base, des données envoyées, après que l'UE a reçu le premier message de réponse de transmission, par l'UE au moyen du premier support de la première cellule de type hotspot.

2. Procédé selon la revendication 1, le procédé comprend en outre, avant l'étape d'envoi (S 120), par la station de base, à l'UE, d'un premier message de réponse de transmission en réponse au premier message de requête de transmission, l'étape suivante :
envoi (S 150), par la station de base, à la première cellule de type hotspot, d'un message de reconfiguration de contrôle des ressources radio, noté RRC, pour la mise à jour d'une configuration d'interface air.

3. Procédé selon la revendication 1 ou 2, le procédé comprend en outre, avant l'étape de réception (S110), par une station de base, d'un premier message de requête de transmission envoyé par un équipement utilisateur, UE, et sollicitant l'envoi de données à la station de base au moyen d'un premier support d'une première cellule de type hotspot, l'étape suivante :
détermination (S140), par la station de base, d'un identifiant d'une cellule de type hotspot à portée de service de la station de base.

4. Procédé selon la revendication 3, le procédé comprend en outre, avant l'étape d'envoi (S 120), par la station de base, à l'UE, d'un premier message de réponse de transmission en réponse au premier message de requête de transmission, l'étape suivante :
détermination, par la station de base, que la première cellule de type hotspot se trouve à portée de service de la station de base.

5. Procédé selon la revendication 3, le procédé comprend en outre, suite à l'étape de détermination (S140), par la station de base, d'un identifiant d'une cellule de type hotspot à portée de service de la station de base, l'étape suivante :
envoi, par la station de base, à l'UE, de l'identifiant de la cellule de type hotspot à portée de service de la station de base, de façon à ce que l'UE sélectionne la première cellule de type hotspot à partir de la cellule de type hotspot à portée de service de la station de base.

6. Procédé de transmission de données, comprenant les étapes suivantes :
envoi (S210), par un équipement utilisateur, noté UE, à une station de base, d'un premier message de requête de transmission sollicitant l'envoi de données à la station de base au moyen d'un premier support d'une première cellule de type hotspot, le premier message de requête de transmission véhiculant un identifiant du premier support et un identifiant de la première cellule de type hotspot ;
réception (S220), par l'UE, d'un premier message de réponse de transmission envoyé par la station de base en réponse au premier message de requête de transmission ; et
envoi (S230), par l'UE, des données à la station de base au moyen du premier support de la première cellule de type hotspot.

7. Procédé selon la revendication 6, dans lequel le premier message de réponse de transmission est envoyé par la station de base après que la station de base a déterminé que la première cellule de type hotspot se trouve à portée de service de la station de base.

8. Procédé selon la revendication 6, le procédé comprend en outre, avant l'étape d'envoi (S210), par un équipement utilisateur, UE, à une station de base, d'un premier message de requête de transmission sollicitant l'envoi de données à la station de base au moyen d'un premier support d'une première cellule de type hotspot, les étapes suivantes :
réception (S240), par l'UE, d'un identifiant relatif à une cellule de type hotspot à portée de service de la station de base et envoyé par la station de base, et sélection d'une première cellule de type hotspot à partir de la cellule de type hotspot à portée de service de la station de base ; ou
réception (S250), par l'UE, d'un identifiant relatif à une station de base de desserte et envoyé par chaque cellule de type hotspot, et sélection, au titre de la première cellule de type hotspot, d'une cellule de type hotspot dont la station de base de desserte possède un identifiant qui est identique à un identifiant de la station de base.

9. Procédé de transmission de données, comprenant les étapes suivantes :
réception (S310), par un noeud habilitant une cellule de type hotspot, de données envoyées par un équipement utilisateur, noté UE, après que l'UE a envoyé un premier message de requête de transmission à une station de base, le premier message de requête de transmission sollicitant l'envoi des données à la station de base au moyen d'un premier support de la cellule de type hotspot, et le premier message de requête de transmission véhiculant un identifiant du premier support et un identifiant de la cellule de type hotspot ; et
envoi (S320), par le noeud, à la station de base, des données de l'UE au moyen du premier support.

10. Procédé selon la revendication 9, le procédé comprend en outre, avant l'étape de réception (S310), par un noeud habilitant une cellule de type hotspot, de données envoyées par un équipement utilisateur, UE, les étapes suivantes :
réception (S330), par le noeud, d'un message de reconfiguration de contrôle des ressources radio, noté RRC, servant à la mise à jour d'une configuration d'interface air et envoyé par la station de base ; et
mise à jour (S340), par le noeud, de la configuration d'interface air selon le message de reconfiguration de RRC.

11. Procédé selon la revendication 9 ou 10, le procédé comprend en outre, avant l'étape de réception (S310), par un noeud habilitant une cellule de type hotspot, de données envoyées par un équipement utilisateur, UE, les étapes suivantes :
envoi, par le noeud, à la station de base, de l'identifiant de la cellule de type hotspot ; ou
réception, par le noeud, de l'identifiant relatif à la cellule de type hotspot et configuré par la station de base ; ou
réception, par le noeud, de l'identifiant relatif à la cellule de type hotspot et configuré par un centre d'exploitation, d'administration et de maintenance, notées OAM.

12. Procédé selon l'une quelconque des revendications 9 à 11, le procédé comprend en outre, avant l'étape de réception (S310), par un noeud habilitant une cellule de type hotspot, de données envoyées par un équipement utilisateur, UE, l'étape suivante :
envoi, par le noeud, à l'UE, d'un identifiant de la station de base, de façon à ce que l'UE détermine que le noeud se trouve à portée de service de la station de base.

13. Station de base (700), comprenant un émetteur (710), un récepteur (720), une mémoire (730) et un processeur (740) relié à l'émetteur (710), au récepteur (720) et à la mémoire (730), la mémoire (730) stockant un groupe de code de programme, et le processeur (740) étant configuré pour invoquer le code de programme stocké dans la mémoire (730) dans le but d'exécuter le procédé selon l'une quelconque des revendications 1 à 5.

14. Équipement utilisateur (800), comprenant un émetteur (810), un récepteur (820), une mémoire (830) et un processeur (840) relié à l'émetteur (810), au récepteur (820) et à la mémoire (830), la mémoire (830) stockant un groupe de code de programme, et le processeur (840) étant configuré pour invoquer le code de programme stocké dans la mémoire (830) dans le but d'exécuter le procédé selon l'une quelconque des revendications 6 à 8.

15. Appareil de communication (900), comprenant un émetteur (910), un récepteur (920), une mémoire (930) et un processeur (940) relié à l'émetteur (910), au récepteur (920) et à la mémoire (930), la mémoire (930) stockant un groupe de code de programme, et le processeur (940) étant configuré pour invoquer le code de programme stocké dans la mémoire (930) dans le but d'exécuter le procédé selon l'une quelconque des revendications 9 à 12.
